# EUROPEAN PATENT SPECIFICATION

(11) **EP 4 024 164 B1**
(45) Date of publication and mention of the grant of the patent: **28.01.2026**
(21) Application number: 21206215.2
(22) Date of filing: 03.11.2021
(51) Int. Cl.: G06F 1/20, G06F 1/3206, G06F 1/324

(54) **METHOD AND APPARATUS WITH POWER MANAGEMENT**
VERFAHREN UND VORRICHTUNG FÜR LEISTUNGSVERWALTUNG
PROCÉDÉ ET APPAREIL DE GESTION D'ALIMENTATION

(30) Priority: 31.12.2020 KR 20200188856
(43) Date of publication of application: 06.07.2022
(73) Proprietor: Samsung Electronics Co., Ltd., Suwon-si, Gyeonggi-do 16677 (KR)
(72) Inventor: Gustav, Ahlman, 16678 Suwon-si (KR); Hong, Jae-Ki, 16678 Suwon-si (KR)
(74) Representative: Grünecker Patent- und Rechtsanwälte PartG mbB

(56) References cited:
- WO-A1-2020/011352
- US-A1- 2013 006 427
- US-A1- 2016 033 975
- US-A1- 2019 041 927

## Description

### BACKGROUND

### 1. Field

The following description relates to a method and apparatus with power management.

### 2. Description of Related Art

Dynamic voltage and frequency scaling (DVFS) may be a technology for optimizing the power consumption of a device by adjusting the voltage and frequency of a computing device according to a situation. For example, the operating frequency and voltage of the device may increase through DVFS when the device is to exhibit a high level of performance and may decrease when the device enters a lower-power mode. Cryogenic computing may be a technology for operating a computing device in a low-temperature range.
US 2019/041927 A1 refers to a processor power optimization in terms of a system cooling overhead. In a first step of this method according to US 2019/041927 A1 an efficient temperature of a processor that corresponds to a minimum power dissipation of the processor is determined based on real-time data and one or more part-specific parameters associated with the processor. Subsequently, a set of power differences between other temperatures and the most efficient temperature is determined and stored to a dynamically updated register. If a current temperature is at a point that is cooler than the most efficient temperature, but results in more power dissipation, the processor is considered to be in an overcooled state. In such a case, the cooling subsystem is throttled at the current temperature to increase the real-time temperature of the processor towards the most efficient temperature. Accordingly, a reduction in the power associated with operating the processor as well as the power associated with operating the cooling system is achieved. If instead the current temperature is at the most efficient temperature, the register is used to propose a higher temperature if the associated processor power increase would still be less than the power savings associated with throttling the cooling subsystem.
US 2013/006427 A1 relates to the cooling of electronics, such as computer equipment in a data center. More specifically, US 2013/006427 A1 is directed to methods and apparatus for optimizing the energy efficiency of cooling such electronic equipment when the temperature dependence of the system electronics' power dissipation is considered in conjunction with the power dissipated in cooling equipment such as a chiller. In particular, when a chiller is used in conjunction with a free-cooling heat exchanger, US 2013/006427 A1 provides apparatus and methods for choosing the temperature of coolant provided to the electronics that minimizes the overall power consumption.
US 2016/033975 A1 relates to systems, methods, and computer programs for reducing leakage power of a system on chip (SoC). One such method comprises monitoring a plurality of temperature differentials across a respective plurality of thermoelectric coolers on a system on chip (SoC). Each of the thermoelectric coolers is dedicated to a corresponding one of a plurality of chip sections on the SoC. The thermoelectric coolers are controlled based on the plurality of temperature differentials to minimize a sum of a combined power consumption of the plurality of chip sections and the plurality of corresponding dedicated thermoelectric coolers.
WO 2020/011352 A1 relates to an electronic device and a method for controlling a combined power consumption comprising power consumption of the electronic device and power consumption of a cooling device with an adjustable cooling rate. The electronic device determines a first combined power consumption and adjusts the cooling rate of the cooling device in a direction to increase or decrease the cooling rate. Further, the electronic device determines a second combined power consumption and a change of the combined power consumption. In response to a determined increase of the combined power consumption, the electronic device adjusts the cooling rate of the cooling device in the direction opposite to the previous adjustment, and in response to a determined decrease of the combined power consumption, the electronic device adjusts the cooling rate of the cooling device in the same direction as the previous adjustment.
It is the object of the present invention to provide a method and an apparatus that optimizes a system power while maintaining a same performance of the system in a straightforward way.
This object is solved by the subject matter of the independent claims.
Preferred embodiments are defined in the dependent claims.

### SUMMARY

This Summary is provided to introduce a selection of concepts in a simplified form that is further described below in the Detailed Description. This Summary is not intended to identify key features or essential features of the claimed subject matter, nor is it intended to be used as an aid in determining the scope of the claimed subject matter.

In one general aspect, a processor-implemented method with power management includes: determining an operating frequency of a device; in response to the device operating at the operating frequency, determining a target temperature that improves system power corresponding to a combination of operating power for an operation of the device and cooling power for cooling the device; and adjusting an operating temperature of the device based on the target temperature.

The determining of the target temperature may include: determining, to be the target temperature, a candidate target temperature corresponding to an operating frequency range to which the operating frequency belongs from among a plurality of candidate target temperatures matched to a plurality of operating frequency ranges.

The candidate target temperatures may be determined in advance of the determining of the target temperature based on a relationship among the operating frequency, the operating temperature, and the system power.

The determining of the target temperature may include: determining the target temperature using a machine learning model that is trained with cumulative operating data accumulated during an actual operation of the device.

The machine learning model may be trained based on the operating data to map the operating frequency to the target temperature.

The determining of the target temperature may include: obtaining an optimization dataset matched to an operating mode of the device corresponding to the operating frequency; and determining the operating temperature and a target voltage based on the optimization dataset.

The optimization temperature may be within a low-temperature range below 150 degrees Kelvin (K).

The adjusting of the operating temperature may include controlling a cooler of the device, and the cooler may be configured to adjust the operating temperature of the device to be in a low-temperature range below 150K dependent on the control of the cooler.

The target temperature that improves the system power may be a temperature that reduces system power usage.

A non-transitory computer-readable storage medium may store instructions that, when executed by a processor, configure the processor to perform the method.

In another general aspect, an apparatus with power management includes: a processor configured to: determine an operating frequency of a device; in response to the device operating at the operating frequency, determine a target temperature that improves system power corresponding to a combination of operating power for an operation of the device and cooling power for cooling the device; and adjust an operating temperature of the device based on the target temperature.

For the determining of the target temperature, the processor may be configured to: determine, to be the target temperature, a candidate target temperature corresponding to an operating frequency range to which the operating frequency belongs from among a plurality of candidate target temperatures matched to a plurality of operating frequency ranges.

For the determining of the target temperature, the processor may be configured to: determine the target temperature using a machine learning model trained with cumulative operating data accumulated during an actual operation of the device.

For the determining of the target temperature, the processor may be configured to: obtain an optimization dataset matched to an operating mode of the device corresponding to the operating frequency; and determine the operating temperature and a target voltage from the optimization dataset.

The target temperature may be within a low-temperature range below 150 degrees Kelvin (K).

For the adjusting of the operating temperature, the processor may be configured to control a cooler of the device, and the cooler may be configured to adjust the operating temperature of the device to be in a low-temperature range below 150K dependent on the control of the cooler.

The apparatus may include a memory storing instructions that, when executed by the processor, configure the processor to perform the determining of the operating frequency, the determining of the target temperature, and the adjusting of the operating temperature.

The apparatus may be a server comprising the device and a cooler configured to cool the device in response to the adjusting of the operating temperature.

In another general aspect, a server includes: a device configured to operate at an operating frequency; an apparatus with power management configured to: in response to the device operating at the operating frequency, determine a target temperature that improves system power corresponding to a combination of operating power for an operation of the device and cooling power for cooling the device; and a cooler configured to adjust an operating temperature of the device based on the target temperature.

For the determining of the target temperature, the power management apparatus may be configured to: determine, to be the target temperature, a candidate target temperature corresponding to an operating frequency range to which the operating frequency belongs from among a plurality of candidate target temperatures matched to a plurality of operating frequency ranges.

For the determining of the target temperature, the power management apparatus may be configured to: determine the target temperature using a machine learning model trained with cumulative operating data accumulated during an actual operation of the device.

For the determining of the target temperature, the power management apparatus may be configured to: obtain an optimization dataset matched to an operating mode of the device corresponding to the operating frequency; and determine the operating temperature and a target voltage from the optimization dataset.

The target temperature may be within a low-temperature range below 150 degrees Kelvin (K).

In another general aspect, a processor-implemented method with power management includes: determining, based on an operating frequency of a device, a target temperature of the device determined to optimize a system power determined based on an operating power and a cooling power for the device; and adjusting an operating temperature of the device based on the target temperature.

The determining of the target temperature may include determining the target temperature to be greater in response to the operating frequency being a second frequency than in response to the operating frequency being a first frequency, and the second frequency may be greater than the first frequency.

The target temperature may be determined based on a target temperature range determined for a range of operating frequencies including the operating frequency of the device.

Each temperature in the target temperature range may be determined based on a corresponding operating frequency in the range of operating frequencies and a corresponding target system power.

Each temperature in the target temperature range may be determined to be a temperature corresponding to a lowest system power among a plurality of temperatures corresponding to different system powers and a same operating frequency.

The target temperature may be determined based on any one of a mean value, a maximum value, a minimum value, and a median value of temperatures in the target temperature range.

In another general aspect, a processor-implemented method with power management includes: determining, based on an operating frequency of a device, a target temperature of a device; and reducing a system power consumption by adjusting an operating temperature of the device based on the target temperature, wherein the system power consumption includes a power consumption of the device and a power consumption of a cooler of the device.

The determining of the target temperature may include increasing the determined target temperature in response to an increase in the operating frequency.

Other features and aspects will be apparent from the following detailed description, the drawings, and the claims.

### BRIEF DESCRIPTION OF THE DRAWINGS

FIG. 1 illustrates an example of an overall operation of a power management apparatus.
FIG. 2 illustrates an example graph of operating power based on an operating frequency with respect to operating temperatures.
FIG. 3 illustrates an example graph of operating power and cooling power based on an operating temperature.
FIG. 4 illustrates an example of determining an optimal temperate based on cooling power.
FIG. 5A illustrates an example graph of an optimal temperature based on an operating frequency.
FIG. 5B illustrates an example of setting a representative optimal temperature for each of operating frequency ranges.
FIG. 5C illustrates an example of mapping information in which an optimization dataset is mapped to each operating frequency range.
FIG. 6 illustrates an example of training a neural network model.
FIG. 7 illustrates an example of a power management method.
FIGS. 8 and 9 illustrate examples of a configuration of a device.
FIGS. 10 and 11 illustrate an example of a cooling structure.
FIG. 12 illustrates an example of a power management apparatus.
FIG. 13 illustrates an example of a server.

Throughout the drawings and the detailed description, unless otherwise described or provided, the same reference numerals refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known, after an understanding of the disclosure of this application, may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for the purpose of describing particular examples only, and is not to be used to limit the disclosure. As used herein, the singular forms "a," "an," and "the" are intended to include the plural forms as well, unless the context clearly indicates otherwise. As used herein, the term "and/or" includes any one and any combination of any two or more of the associated listed items. As used herein, the terms "include," "comprise," and "have" specify the presence of stated features, numbers, operations, elements, components, and/or combinations thereof, but do not preclude the presence or addition of one or more other features, numbers, operations, elements, components, and/or combinations thereof. As used herein, the use of the term "may" with respect to an example or embodiment (for example, as to what an example or embodiment may include or implement) means that at least one example or embodiment exists where such a feature is included or implemented, while all examples are not limited thereto.

In addition, terms such as first, second, A, B, (a), (b), and the like may be used herein to describe components according to example embodiments. Each of these terminologies is not used to define an essence, order, or sequence of a corresponding component but used merely to distinguish the corresponding component from other component(s). Although terms of "first" or "second" are used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween. Likewise, expressions, for example, "between" and "immediately between" and "adjacent to" and "immediately adjacent to" may also be construed as described in the foregoing.

Unless otherwise defined, all terms, including technical and scientific terms, used herein have the same meaning as commonly understood by one of ordinary skill in the art to which this disclosure pertains consistent with and after an understanding of the present disclosure. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

Also, in the description of example embodiments, detailed description of structures or functions that are thereby known after an understanding of the disclosure of the present application may be omitted when it is deemed that such description may cause ambiguous interpretation of the example embodiments.

Hereinafter, examples will be described in detail with reference to the accompanying drawings, and like reference numerals in the drawings refer to like elements throughout.

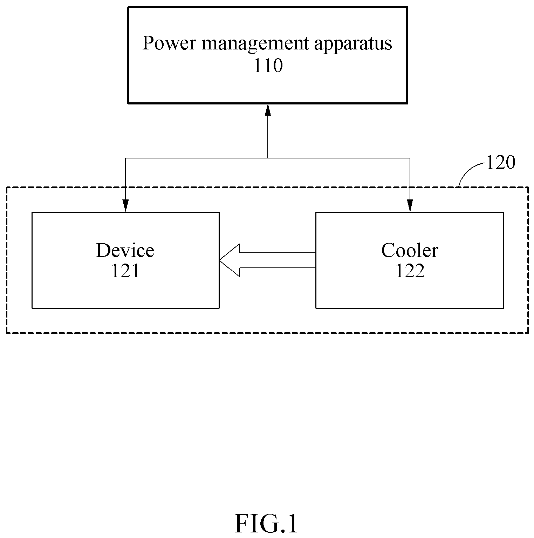

FIG. 1 illustrates an example of an overall operation of a power management apparatus. Referring to FIG. 1, a power management apparatus 110 may optimize power of a system 120. Power optimization may refer to an operation for maximizing power efficiency by adjusting various factors associated with power consumption according to a situation. For example, power optimization may include discovering or determining a combination of the factors that minimizes power consumption while maintaining a same performance (e.g., an operating frequency). The power management apparatus 110 may optimize power using dynamic voltage and frequency scaling (DVFS). The DVFS may be a technology for optimizing power consumption of a target device to be managed or controlled by adjusting an operating frequency (e.g., a clock) and an operating voltage of the target device according to a situation. For example, the operating frequency and the operating voltage may increase in a situation that is implemented with a relatively high level of performance (for example, the execution of an application that uses many resources) and may decrease in a situation that is implemented with a relatively low level of performance (for example, a standby state).

The power management apparatus 110 of one or more embodiments may optimize power additionally based on a temperature that is not considered in a typical DVFS method. In the typical DVFS method, a temperature may be controlled or adjusted mainly or exclusively to maintain durability (for example, to reduce a frequency and a voltage to prevent overheating). However, the power management apparatus 110 of one or more embodiments may control or adjust a temperature to improve power efficiency. For example, the power management apparatus 110 may apply the DVFS to a low-temperature environment including a cryogenic environment. The low-temperature environment may enable the improvement of a physical property of a computing device, and faster execution with lower power. For example, by controlling or adjust a temperature such that the computing device operates in the low-temperature environment, the power management apparatus 110 may improve the physical properties of the computing device and may increase an execution speed of the computing device operating with lower power. As a temperature decreases, power used by the computing device to achieve a same performance may decrease, whereas cooling power for reducing the temperature may increase. In consideration of such cooling power, the power management apparatus 110 of one or more embodiments may optimize the total power of the system 120.

Referring to FIG. 1, the system 120 may include a device 121 and a cooler 122. The device 121 may operate while changing a voltage and/or frequency through the DVFS, and the cooler 122 may adjust an operating temperature of the device 121. Here, power used for an operation of the device 121 may be defined as operating power, and power used for cooling the device 121 may be defined as cooling power. The operating power may correspond to power consumed by the device 121, and the cooling power may correspond to power consumed by the cooler 122. As power consumption of the device 121 used to obtain a certain level of performance decreases, the efficiency of the operating power may increase. As power consumption of the cooler 122 used to maintain a certain operating temperature decreases, the efficiency of the cooling power may increase. A combination of the operating power and the cooling power may be defined as system power. For example, the operating power and the cooling power may be combined through summation or adding up. The system power may correspond to power consumed by the system 120.

The power management apparatus 110 may optimize the system power based on both the operating power and the cooling power. For example, the power management apparatus 110 may verify or determine an operating frequency of the device 121, and determine an optimal temperature (e.g., a target temperature) that optimizes (e.g., improves by reducing) the system power at the operating frequency. For example, the power management apparatus 110 may determine an optimal temperature matched to a current operating frequency using matching information between operating frequencies and optimal temperatures. This matching information may be obtained in advance from specifications of the device 121 and/or through experiments. For another example, the power management apparatus 110 may determine the optimal temperature using a machine learning model. The machine learning model may be trained in advance and/or in real time to match the operating frequencies and the optimal temperatures. The machine learning model may be trained with cumulative operating data that is accumulated during an actual operation of the device 121, e.g., in real-time, and, through the training, the machine learning model optimized, trained, or learned for actual operating data may be obtained. The machine learning model may include a neural network model, for example. Here, that an optimal temperature is determined that optimizes system power is not intended to require a maximum optimization. For example, the optimal temperature may mean a temperature that reduces the system power, such that the system power is reduced compared to when the system is operating at another temperature.

The power management apparatus 110 may determine an optimal voltage along with the optimal temperature. The optimal temperature and the optimal voltage may be referred to herein as an optimization dataset. There may be such an optimization dataset, and such optimization dataset may be determined, for each operating frequency. In such a case, the matching information may include therein an optimization dataset for each operating frequency, and the power management apparatus 110 may determine an optimal temperature and an optimal voltage that are matched to a current operating frequency using such matching information. Alternatively, a neural network model that is trained to map operating frequencies and optimization datasets may be used.

When the optimal temperature and/or optimal voltage is determined, the power management apparatus 110 may adjust an operating temperature and/or operating voltage of the device 121 to fit, or to approximately be, the optimal temperature and/or optimal voltage. The power management apparatus 110 may adjust the operating temperature by controlling the cooler 122. A range of the optimal temperature, or an optimal temperature range, may include a low-temperature range below 150 degrees Kelvin (K) and/or a cryogenic range below 77K. The cooler 122 may adjust the operating temperature to the optimal temperature through various cooling methods. For example, the cooler 122 may employ immersion cooling that immerses the device 121 in a refrigerant such as liquid nitrogen and liquid methane. For another example, the cooler 122 may employ dry cooling using an air-cooled heat exchanger, spry cooling, and/or dilution refrigeration. In addition, the power management apparatus 110 may adjust the operating voltage by controlling a power supplier of the device 121.

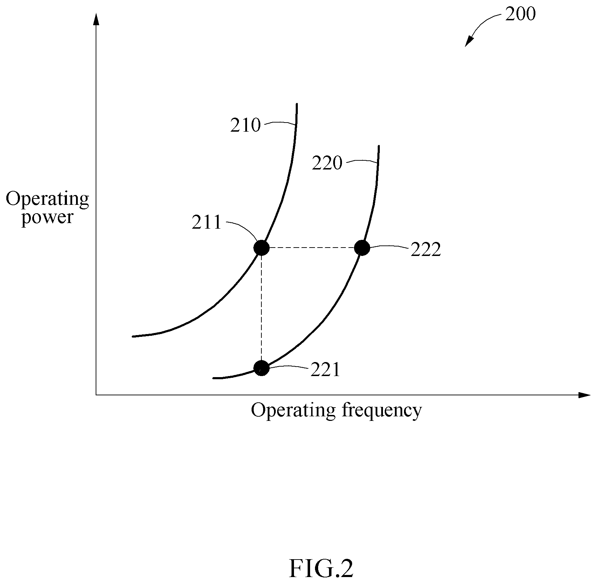

FIG. 2 illustrates an example graph of operating power based on an operating frequency with respect to operating temperatures. Referring to FIG. 2, a graph 200 includes a first curve 210 indicating a first temperature and a second curve 220 indicating a second temperature. For example, the first temperature may be 300K and the second temperature may be between 77K and 150K, in which 300K may correspond to a room temperature and 150K to 77K may correspond to a low temperature. The graph 200 indicates each operating frequency and each operating power normalized based on a first point 211 on the first curve 210. By comparing each of 2-1 point 221 and 2-2 point 222 on the second curve 220 to the first point 211, the power management apparatus 110 may verify or determine an influence of a low-temperature environment on an operating frequency and operating power.

By comparing 2-1 point 221 to the first point 211, the power management apparatus 110 may verify or determine that, as an operating temperature decreases from the first temperature to the second temperature, operating power used to operate the same operating frequency decreases greatly. Also, by comparing 2-2 point 222 to the first point 211, the power management apparatus 110 may verify or determine that an operating frequency that may operate with the same operating power increases greatly. Thus, the power management apparatus 110 may verify or determine that, when the temperature decreases, operating power for a stable operation at a given operating frequency may decrease, and such an effect may be significantly exhibited in a low-temperature range.

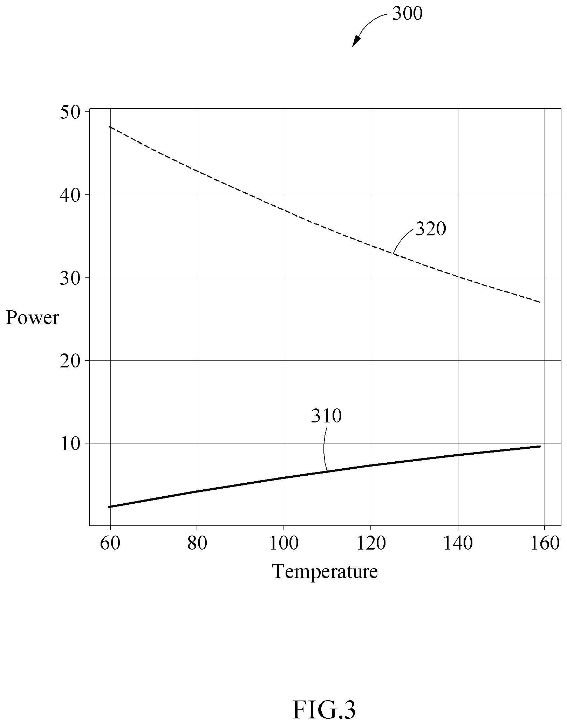

FIG. 3 illustrates an example graph of operating power and cooling power based on an operating temperature. Referring to FIG. 3, a graph 300 includes a curve 310 indicating operating power based on a temperature, and a curve 320 indicating cooling power based on a temperature. Based on the curve 310, when the temperature decreases, operating power may decrease due to a low-temperature effect. In contrast, based on the curve 320, when the temperature decreases, cooling power of a cooler may increase rapidly. Thus, a power management apparatus of one or more embodiments may optimize system power by maintaining a balance between the operating power and the cooling power based on such a relationship between the operating power and the cooling power.

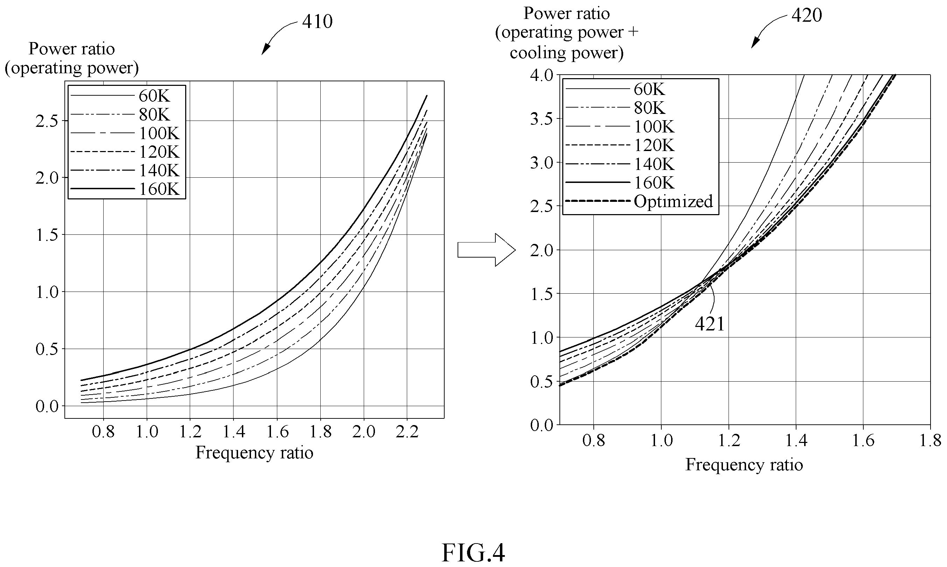

FIG. 4 illustrates an example of determining an optimal temperate based on cooling power. Referring to FIG. 4, a graph 410 indicates a power ratio of operating power based on a frequency ratio, for each of a plurality of temperatures (e.g., 60K, 80K, 100K, 120K, 140K, and 160K). Cooling power is not applied to the graph 410. Referring to the graph 410, operating power may increase as a frequency increases at all temperatures, and may decrease as a temperature decreases. A graph 420 indicates a power ratio of system power based on a frequency ratio, for each of the plurality of temperatures. The system power may include operating power and cooling power. That is, the cooling power is applied to the graph 420. For example, the graph 420 may be derived by applying, to the graph 410, a relationship between the operating power and the cooling power based on the curves 310 and 320 of FIG. 3.

Referring to the graph 420, a temperature that minimizes the system power may be determined at each frequency. This temperature may be defined as an optimal temperature. A curve 421 is formed by connecting such optimal temperatures. For example, in a low-frequency range, a relatively low temperature (e.g., 60K) may correspond to an optimal temperature. In a high-frequency range, a relatively high temperature (e.g., 160K) may correspond to an optimal temperature. A power management apparatus of one or more embodiments may determine an optimal temperature corresponding to an operating frequency of a device based on the curve 421, and may adjust an operating temperature of the device based on the optimal temperature.

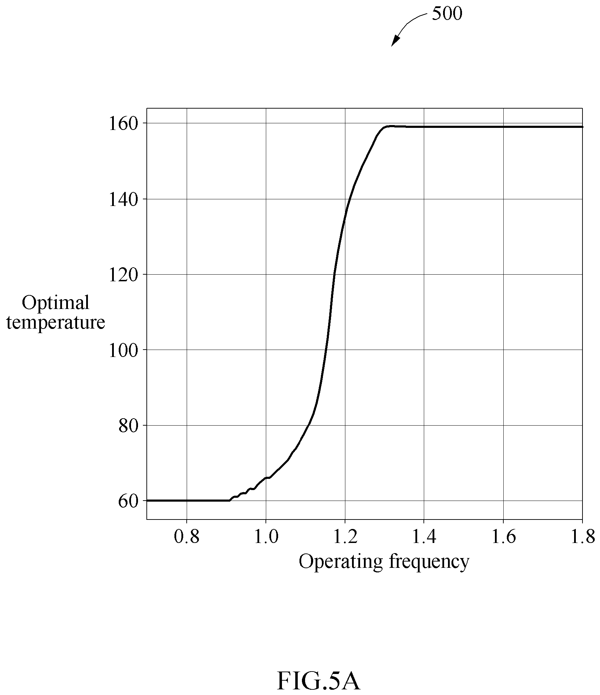

FIG. 5A illustrates an example graph of an optimal temperature based on an operating frequency (e.g., a frequency ratio). Referring to FIG. 5A, a graph 500 indicates a curve obtained by converting the curve 421 of FIG. 4 to an optimal temperature based on an operating frequency. In the graph 500, an optimal temperature is limited to 60K to 160K because the range of temperatures forming the curve 421 is from 60K to 160K. However, in a case in which the curve 421 is derived from a different temperature range, such an optimal temperature range of the graph 500 may be changed accordingly. From the graph 500, matching information between operating frequencies and optimal temperatures may be derived. For example, each operating frequency on an x-axis of the graph 500 may be matched to an optimal temperature on a y-axis of the graph 500. In this example, different optimal temperatures may be matched to respective operating frequencies. In the example, an optimal voltage may also be matched to each operating frequency along with a corresponding optimal temperature.

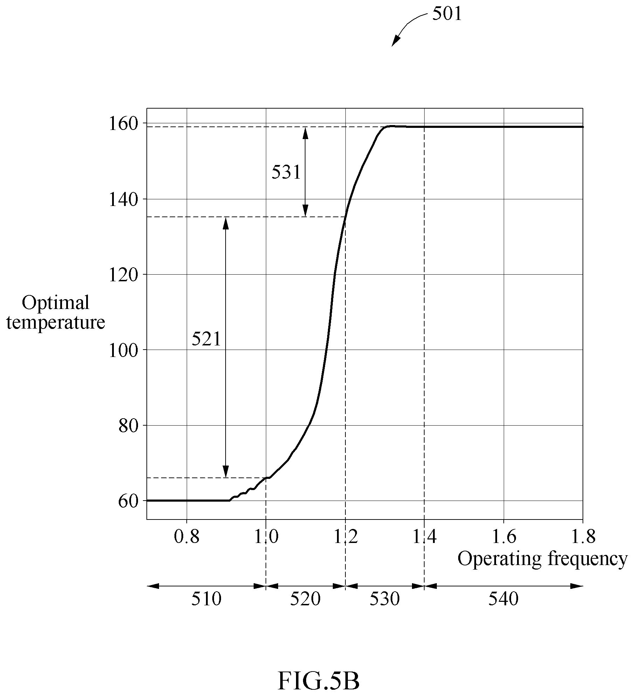

A power management apparatus may also divide the operating frequencies on the x-axis into some ranges, and match a representative value to each of the ranges, a non-limiting example of which is illustrated in FIG. 5B.

FIG. 5B illustrates an example of setting a representative optimal temperature for each of operating frequency ranges (e.g., for each operating frequency range in the graph 500 of FIG. 5A). Referring to FIG. 5B, in a graph 501, operating frequencies are divided into operating frequency ranges 510 through 540, and an optimal temperature value may be matched to each of the operating frequency ranges 510 through 540. A representative value of each range may be determined to be an optimal temperature. The representative value may be a statistical value, such as, for example, any one of a mean value, a maximum value, a minimum value, and a median value.

For example, a second median value of a second optimal temperature range 521 may be matched to an optimal temperature of the second operating frequency range 520, and a third median value of a third optimal temperature range 531 may be matched to an optimal temperature of the third operating frequency range 530. In this example, when a device operates in the second operating frequency range 520, the power management apparatus may adjust an operating temperature of the device to be the optimal temperature corresponding to the second median value; and when the device operates in the third operating frequency range 530, the power management apparatus may adjust the operating temperature to be the optimal temperature corresponding to the third median value. In this example, an optimal voltage may be set for each of the operating frequency ranges 510 through 540, or set for each operating frequency as described above with reference to FIG. 5A. When the optimal voltage is set as in the latter case, an optimal temperature may be maintained and an optimal voltage may change, in the same frequency range.

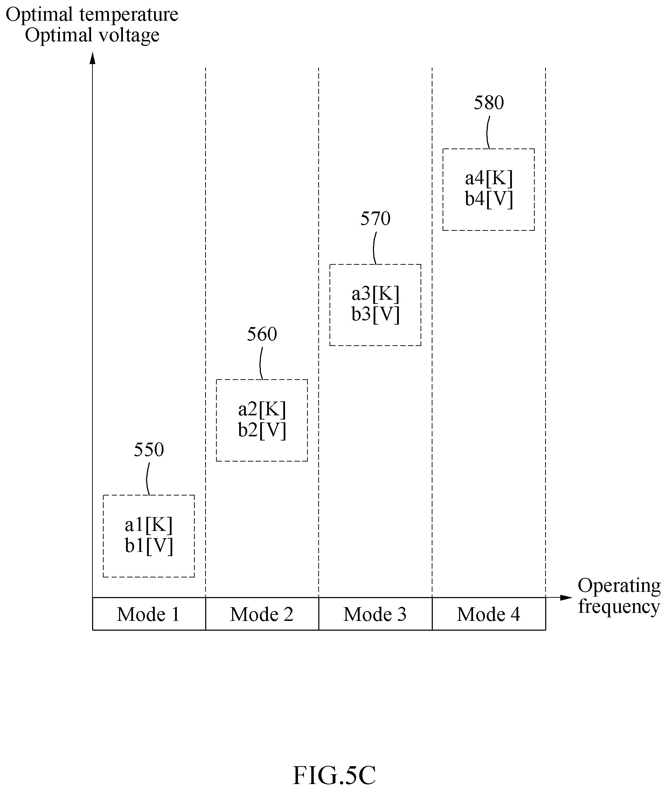

FIG. 5C illustrates an example of mapping information in which an optimization dataset is mapped to each operating frequency range. Referring to FIG. 5C, operating frequencies are divided into ranges. For example, a criterion for the dividing may be an operating mode of a device, such as, for example, a low-power mode and a high-performance mode. Although such a mode is illustrated in FIG. 5C as including Mode 1 through Mode 4, frequency ranges and/or modes may be divided into different numbers of ranges or modes. As illustrated in FIG. 5C, optimization datasets 550 through 580 are matched to corresponding modes, respectively. For example, the first optimization dataset 550 is matched to Mode 1 and includes an optimal temperature a1 and an optimal voltage b1. The remaining optimization datasets 560, 570, and 580 include optimal temperatures a2, a3, and a4, respectively, and optimal voltages b2, b3, and b4, respectively. Each of the optimal temperatures a1 through a4 and/or the optimal voltages b1 through b4 may indicate a specific value of temperature and/or voltage, or a specific range of temperature and/or voltage. A power management apparatus may determine an optimization dataset corresponding to a current operating frequency using the mapping information as illustrated in FIG. 5C.

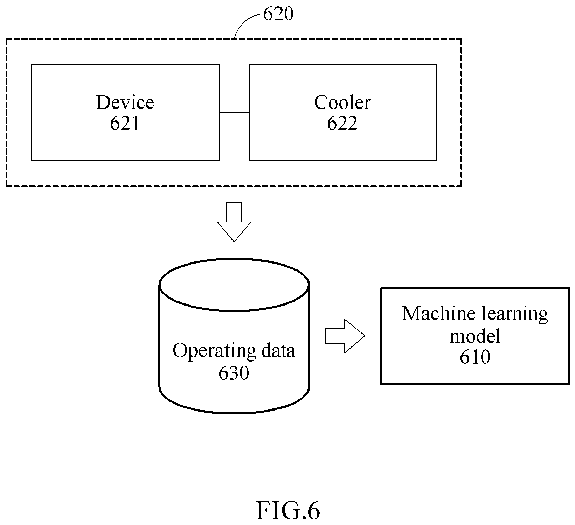

FIG. 6 illustrates an example of training a machine learning model. Referring to FIG. 6, during an actual operation of a device 621 and a cooler 622 of a system 620, operating data 630 may be accumulated, and a machine learning model 610 may be trained based on the operating data 630. The operating data 630 may include information associated with, for example, an operating frequency, an operating voltage, an operating temperature, operating power, and cooling power. The operating data 630 may be received from the device 621 and/or the cooler 622, or measured through a sensor installed in the device 621 and/or the cooler 622. In an example, the sensor may be of the device 621, the cooler 622, and/or a power management apparatus.

By training or learning based on the operating data 630, the machine learning model 610 may be configured to verify a relationship among an operating frequency, an operating voltage, an operating temperature, and system power, and derive an optimal temperature and/or optimal voltage from the given operating frequency. The machine learning model 610 may be a deep neural network (DNN) including a plurality of layers. The layers may include an input layer, a hidden layer, and an output layer. The DNN may include a fully-connected network (FCN), a convolutional neural network (CNN), and/or a recurrent neural network (RNN).

Such a neural network model may be trained based on deep learning, and then may map input data and output data that have a nonlinear relationship to perform an inference for the training purpose. Deep learning may refer to a machine learning method applied to tackle such an issue as image or speech recognition from a big dataset. Deep learning may be construed as being an optimization problem-solving process of finding a point at which energy is minimized while training the neural network model using prepared training data.

Deep learning may include supervised and unsupervised learning. Through supervised or unsupervised learning, a weight corresponding to an architecture of the neural network model or a model may be obtained. Through such a weight, the input data and the output data of the neural network model may be mapped. When the width and depth of the neural network model are sufficiently large, the neural network model may have a capacity large enough to implement a function. When the neural network model learns a sufficiently great amount of training data through an appropriate training process, the optimal performance may be acquired.

The machine learning model 610 may be trained to output an optimal temperature and/or optimal voltage corresponding to a current operating frequency based on the operating data 630. For example, operating powers, cooling powers, and system powers based on temperatures and/or voltages with which respective operating frequencies operate may be derived through the operating data 630, and the machine learning model 610 may be trained to output an optimal temperature and/or optimal voltage corresponding to each operating frequency based on such data. For example, output data of the machine learning model 610 may be in a form illustrated in FIGS. 5A through 5C (e.g., the optimization datasets 550 through 580 in FIG. 5C).

The operating data 630 may be data based on an actual operation, and thus the optimal temperature and/or optimal voltage derived through the machine learning model 610 may be closer to actual data compared to what is derived based on a device specification. Thus, when the machine learning model 610 is trained with the operating data 630, an optimal temperature and/or optimal voltage corresponding to actual data may be obtained. In addition, the machine learning model 610 may be repeatedly updated while the operating data 630 is accumulated such that a state change of the system 620 is applied. For example, the machine learning model 610 may be updated based on a predetermined time interval (e.g., a periodic and/or nonperiodic interval), a significant state change of the system 620, a request from an administrator or manager, or the like. Through the updating, the machine learning model 610 may maintain model parameters corresponding to an actual state of the system 620.

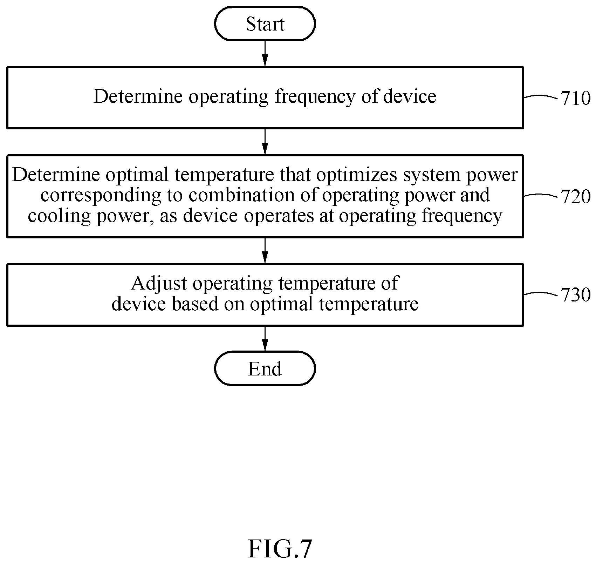

FIG. 7 illustrates an example of a power management method. Referring to FIG. 7, in operation 710, a power management apparatus may determine an operating frequency of a device. The power management apparatus may receive information associated with the operating frequency from the device, or measure the operating frequency through a sensor installed in the device. In operation 720, when the device operates at the operating frequency, the power management apparatus may determine an optimal temperature that optimizes system power corresponding to a combination of operating power and cooling power. The power management apparatus may also determine an optimal voltage that optimizes the system power at the operating frequency.

In an example, the power management apparatus may determine, to be the optimal temperature, a candidate optimal temperature in an operating frequency range to which the operating frequency of the device belongs from among a plurality of candidate optimal temperatures matched to a plurality of operating frequency ranges, and/or obtain the optimal voltage matched to the optimal temperature. The optimal temperature and/or the optimal voltage may be determined in advance based on a relationship among the operating frequency, an operating temperature, and system power. In another example, the power management apparatus may determine the optimal temperature and/or the optimal voltage using a machine learning model that is trained with cumulative operating data accumulated during an actual operation of the device. The machine learning model may be trained based on the operating data to map the operating frequency to the optimal temperature and/or optimal voltage.

In operation 730, the power management apparatus may adjust an operating temperature of the device based on the optimal temperature. The power management apparatus may also adjust an operating voltage of the device based on the optimal voltage. The operating temperature may be adjusted through a cooler, and the operating voltage may be adjusted through a power supplier. For example, a range of the operating temperature and/or the optimal temperature may include a low-temperature range below 150K and/or a cryogenic range below 77K. For a more detailed description of the power management method, reference may be made to what is described herein with reference to FIGS. 1 through 6, and 8 through 13.

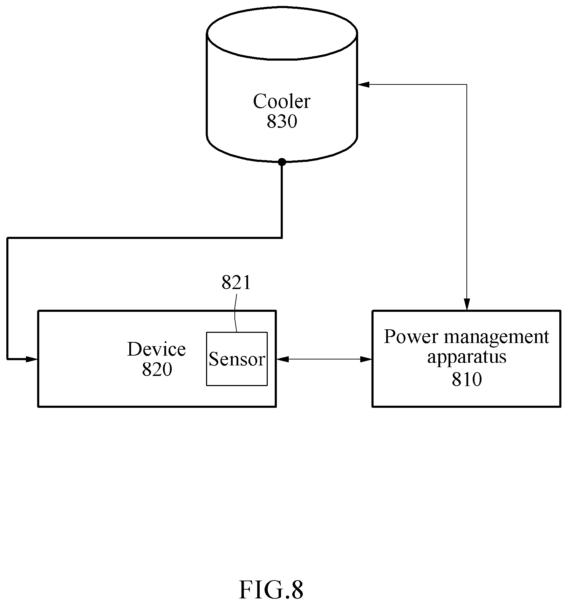

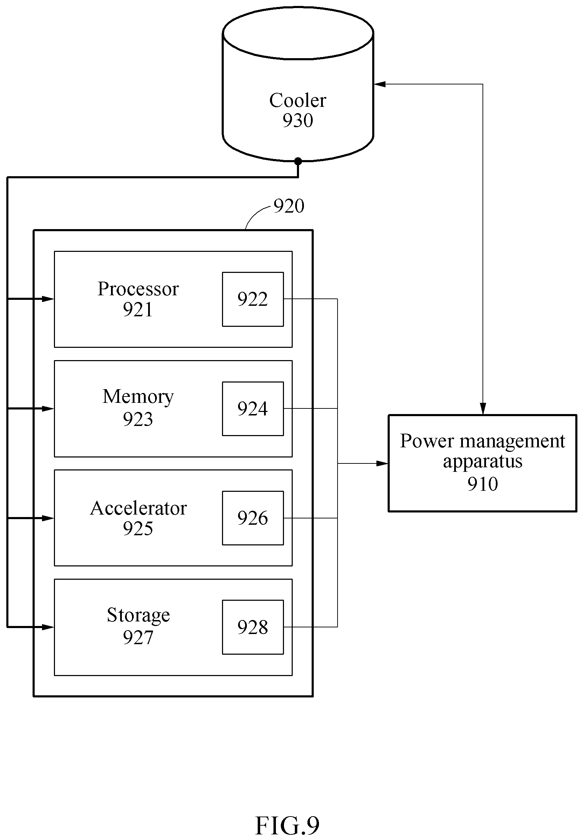

FIGS. 8 and 9 illustrate examples of a configuration of a device. Referring to FIG. 8, a device 820 may include a sensor 821. A power management apparatus 810 may measure a state of the device 820 through the sensor 821 and/or receive state information from the device 820. The state information may include information associated with, for example, an operating frequency, an operating voltage, an operating temperature, and/or operating power. The power management apparatus 810 may measure a state of a cooler 830 through another sensor and/or receive state information from the cooler 830. The state information of the cooler 830 may include information associated with, for example, cold production and cooling power. The power management apparatus 810 may determine an optimal temperature and/or optimal voltage based on the state of the device 820 and/or the cooler 830, and may control the device 820 and/or the cooler 830 such that the device 820 operates with the optimal temperature and/or optimal voltage.

Referring to FIG. 9, a device 920 may include a processor 921 (e.g., one or more processors), a memory 923 (e.g., one or more memories), an accelerator 925, a storage 927, and sensors 922, 924, 926, and 928 configured to measure states of the respective components. However, the illustrated components are provided merely as an example, and thus the device 920 may include a portion of the components or further include other components. The power management apparatus 910 may measure the respective states of the components of the device 920 through the sensors 922, 924, 926, and 928, and may control the components and/or the cooler 930 such that the components operate with an optimal temperature and/or optimal voltage. For example, the power management apparatus 910 may control the cooler 930 such that a greater amount of cooling air is provided to a component generating more heat. The cooler 930 may supply a predetermined amount of cooling air to a target component as per an instruction by the power management apparatus 910 to control a temperature of the target component.

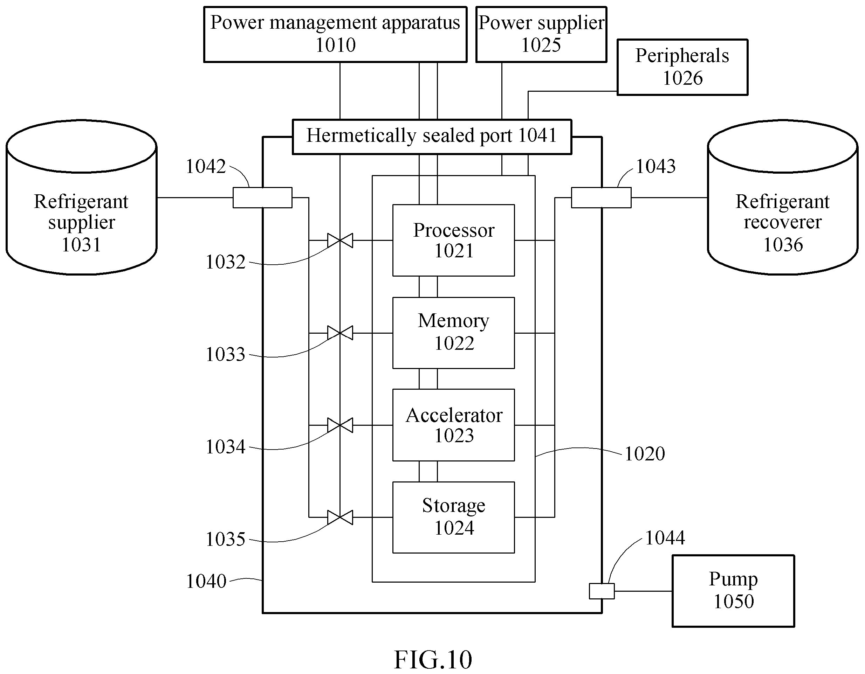

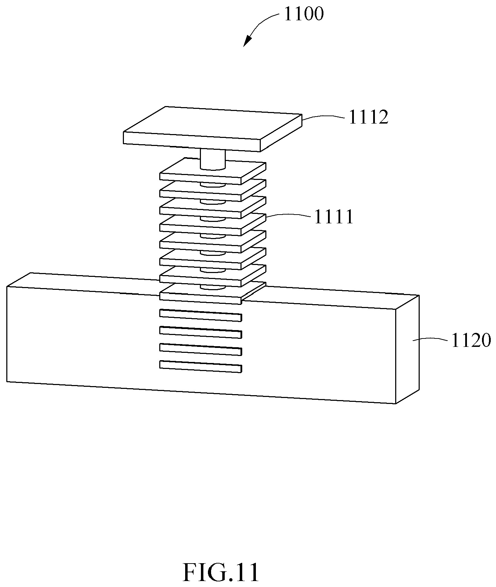

FIGS. 10 and 11 illustrate an example of a cooling structure. Referring to FIG. 10, a power management apparatus 1010 may optimize power of a device 1020 inside a vacuum-insulated case 1040. The device 1020 may include a processor 1021 (e.g., one or more processors), a memory 1022 (e.g., one or more memories), an accelerator 1023, and a storage 1024. However, the illustrated components are provided merely as an example, and thus the device 1020 may include a portion of the components, or further include other components.

The power management apparatus 1010 may be connected to valves 1032, 1033, 1034, and 1035 and each component of the device 1020 through a hermetically sealed port 1041. The power management apparatus 1010 may thereby measure and/or receive state information from each component of the device 1020, determine an optimal temperature and/or optimal voltage, and control the valves 1032, 1033, 1034, and 1035 and/or a power supplier 1025 based on the determined optimal temperature and/or optimal voltage. The power supplier 1025 and peripherals 1026 may be connected to the device 1020 through the sealed port 1041. The power supplier 1025 may supply power to the device 1020. For example, the power supplier 1025 may apply the optimal voltage to the device 1020 based on an instruction by the power management apparatus 1010. The peripherals 1026 may include, for example, an input and output device, a network device, and/or a display.

A cooler may include a refrigerant supplier 1031 and a refrigerant recoverer 1036. The refrigerant supplier 1031 may supply a refrigerant to each component of the device 1020 through an inlet 1042 and the valves 1032, 1033, 1034, and 1035. The power management apparatus 1010 and/or the refrigerant supplier 1031 may control the valves 1032, 1033, 1034, and 1035 such that an operating temperature of the device 1020 and/or each component of the device 1020 is adjusted to the optimal temperature. By the refrigerant supplied through the valves 1032, 1033, 1034, and 1035, the operating temperature of the device 1020 and/or each component of the device 1020 may be adjusted. The refrigerant may be discharged through an outlet 1043 and recovered by the refrigerant recoverer 1036. A pump 1050 may maintain a vacuum state in the vacuum-insulated case 1040 through a pumping port 1044.

For example, the cooler may use immersion cooling that immerses the device 1020 in a refrigerant such as liquid nitrogen and/or liquid methane. Referring to FIG. 11, an immersion cooling structure 1100 may include a heat sink 1111 and a heat spreader 1112. The heat sink 1111 may receive cooling air from a refrigerant 1120 and transfer the cooling air to a target component through the heat spreader 1112. Here, an amount of produced cooling air, or a cold production amount, may be determined based on a contact area between the heat sink 1111 and the refrigerant 1120. For example, when a greater amount of the refrigerant 1120 is supplied and thus the contact area between the heat sink 1111 and the refrigerant 1120 increases, the cold production amount may increase. The target component may be the device 1020 of FIG. 10 and/or each component of the device 1020.

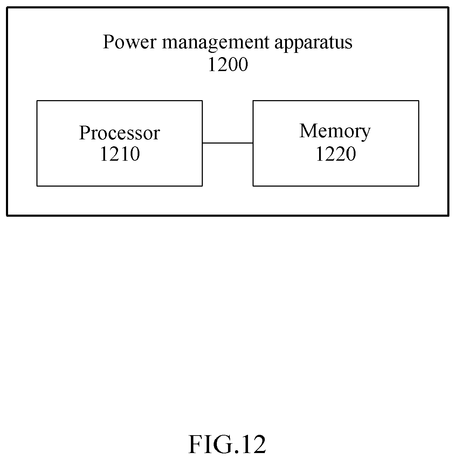

FIG. 12 illustrates an example of a power management apparatus. Referring to FIG. 12, a power management apparatus 1200 includes a processor 1210 (e.g., one or more processors) and a memory 1220 (e.g., one or more memories). The memory 1220 may be connected to the processor 1210, and store instructions executable by the processor 1210, data to be processed by the processor 1210, and/or data processed by the processor 1210. The memory 1220 may be a non-transitory computer-readable medium, for example, a high-speed random-access memory (RAM) and/or a nonvolatile computer-readable storage medium (e.g., one or more disk storage devices, flash memory devices, and/or nonvolatile solid-state memory devices).

The processor 1210 may execute instructions to perform the operations described herein with reference to FIGS. 1 through 11 and 13. For example, the processor 1210 may determine an operating frequency of a device, determine an optimal temperature that optimizes system power corresponding to a combination of operating power needed for an operation of the device and cooling power needed for cooling the device when the device operates at the operating frequency, and adjust an operating temperature of the device according to the optimal temperature. For a more detailed description of the power management apparatus 1200, reference may be made to what is described with reference to FIGS. 1 through 11 and 13.

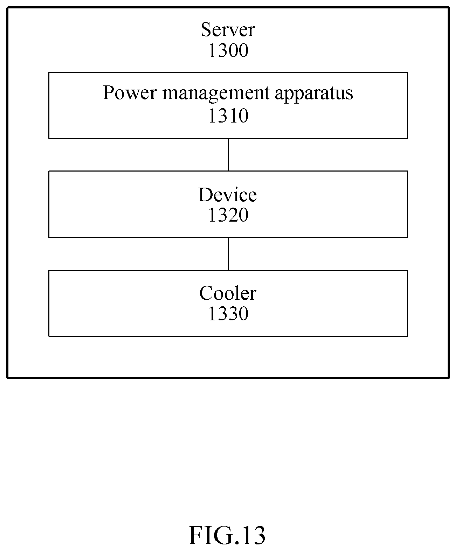

FIG. 13 illustrates an example of a server. Referring to FIG. 13, a server 1300 may include a power management apparatus 1310, a device 1320, and a cooler 1330. For example, the server 1300 may be installed in a data sensor in a low-temperature environment or a cryogenic environment. The device 1320 may operate at a certain operating frequency. When the device 1320 operates at the operating frequency, the power management apparatus 1310 may determine an optimal temperature that optimizes system power corresponding to a combination of operating power needed for an operation of the device 1320 and cooling power needed for cooling the device 1320. The device 1320 may include two or more devices, or the server 1300 may include two or more devices 1320. The cooler 1330 may adjust an operating temperature of the device 1320 according to the optimal temperature. For a more detailed description of the server 1300, the power management apparatus 1310, the device 1320, and the cooler 1330, reference may be made to what is described above with reference to FIGS. 1 through 12.

The power management apparatus, the device, power management apparatus 110, system 120, cooler 122, system 620, device 621, cooler 622, power management apparatus 810, device 820, sensor 821, cooler 830, power management apparatus 910, device 920, processor 921, memory 923, accelerator 925, storage 927, sensors 922, 924, 926, and 928, cooler 930, power management apparatus 1010, device 1020, processor 1021, memory 1022, accelerator 1023, storage 1024, power supplier 1025, peripherals 1026, refrigerant supplier 1031, valves 1032 through 1035, recoverer 1036, vacuum-insulated case 1040, hermetically sealed port 1041, inlet 1042, outlet 1043, pumping port 1044, immersion cooling structure 1100, heat sink 1111, heat spreader 1112, refrigerant 1120, power management apparatus 1200, processor 1210, memory 1220, server 1300, power management apparatus 1310, device 1320, cooler 1330, and other apparatuses, devices, units, modules, and components described herein with respect to FIGS. 1-13 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-13 that perform the operations described in this application are performed by computing hardware, for example, by one or more processors or computers, implemented as described above executing instructions or software to perform the operations described in this application that are performed by the methods. Forexample, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, the scope of the disclosure is defined not by the detailed description, but by the claims.

## Claims

1. A method with power management, comprising:
determining (710) an operating frequency of a device (121);
in response to the device (121) operating at the operating frequency, determining (720) a target temperature that optimizes system power corresponding to a sum of operating power for an operation of the device (121) and cooling power for cooling the device (121) at the operating frequency using matching information between operating frequencies and candidate target temperatures determined in advance, wherein the matching information includes an optimization dataset for each operating frequency and wherein the matching information is derived from a graph (500) matching each operating frequency to an optimal temperature; and
adjusting (730) an operating temperature of the device (121) based on the target temperature to fit the target temperature by controlling a cooler (122) of the device (121), wherein the operating frequency is maintained, and wherein the candidate target temperatures are within a low-temperature range in which as the operating temperature decreases, the operating power decreases and the cooling power increases.

2. The method of claim 1, wherein the determining (720) of the target temperature comprises:
determining, to be the target temperature, the candidate target temperature in a target temperature range corresponding to an operating frequency range to which the operating frequency belongs from among the plurality of candidate target temperatures matched to the plurality of operating frequency ranges (510, 520, 530, 540).

3. The method of claim 2, wherein the candidate target temperature is determined based on any one of a mean value, a maximum value, a minimum value, and a median value of temperatures in the target temperature range.

4. The method of one of claims 1 to 3, wherein the candidate target temperatures are determined in advance of the determining of the target temperature based on a relationship among the operating frequency, the operating temperature, and the system power.

5. The method of one of claims 1 to 4, wherein the determining (720) of the target temperature comprises:
determining (720) the target temperature using a machine learning model (610) that is trained with cumulative operating data (630) accumulated during an actual operation of the device (121).

6. The method of claim 5, wherein the machine learning model (610) is trained based on the operating data to map the operating frequency to the target temperature.

7. The method of one of claims 1 to 6, wherein the determining (720) of the target temperature comprises:
obtaining an optimization dataset matched to an operating mode of the device (121) corresponding to the operating frequency; and
determining the operating temperature and a target voltage based on the optimization dataset.

8. The method of one of claims 1 to 7, wherein the optimization temperature is within a low-temperature range below 150 degrees Kelvin, K.

9. The method of one of claims 1 to 8, wherein
the cooler (122) is configured to adjust the operating temperature of the device (121) to be in a low-temperature range below 150K dependent on the control of the cooler (122).

10. The method of one of claims 1 to 9, wherein the target temperature that optimizes the system power is a temperature that reduces system power usage.

11. The method of one of claims 1 to 10, wherein the determining (720) of the target temperature comprises increasing the determined target temperature in response to an increase in the operating frequency.

12. A server (1300) comprising:
a device (1320) configured to operate (710) at an operating frequency;
an apparatus (1310) with power management configured to:
in response to the device (1320) operating at the operating frequency, determine (720) a target temperature that optimizes system power corresponding to a sum of operating power for an operation of the device (1320) and cooling power for cooling the device (1320) at the operating frequency using matching information between operating frequencies and candidate target temperatures determined in advance, wherein the matching information includes an optimization dataset for each operating frequency and wherein the matching information is derived from a graph (500) matching each operating frequency to an optimal temperature; and
a cooler (1330) configured to adjust (730) an operating temperature of the device (1320) based on the target temperature to fit the target temperature, wherein the operating frequency is maintained, and wherein the candidate target temperatures are within a low-temperature range in which as the operating temperature decreases, the operating power decreases and the cooling power increases.

13. The server (1300) of claim 12, wherein, for the determining (720) of the target temperature, the power management apparatus (1310) is configured to determine, to be the target temperature, the candidate target temperature corresponding to an operating frequency range to which the operating frequency belongs from among the plurality of candidate target temperatures matched to a plurality of operating frequency ranges (510, 520, 530, 540), or
wherein, for the determining of the target temperature, the power management apparatus (1310) is configured to determine the target temperature using a machine learning model (610) trained with cumulative operating data (630) accumulated during an actual operation of the device (1320), or
wherein, for the determining (720) of the target temperature, the power management apparatus (1310) is configured to obtain an optimization dataset matched to an operating mode of the device (1320) corresponding to the operating frequency; and determine the operating temperature and a target voltage from the optimization dataset, or
wherein the target temperature is below 150 degrees Kelvin, K.

14. A non-transitory computer-readable storage medium (1220) storing instructions that, when executed by a processor (1210), configure the processor (1210) to perform power management according to any of the methods of claims 1 to 11.

## Patentansprüche

1. Verfahren mit Energiemanagement, umfassend:
Bestimmen (710) einer Betriebsfrequenz einer Vorrichtung (121);
als Reaktion auf den Betrieb der Vorrichtung (121) bei der Betriebsfrequenz Bestimmen (720) einer Solltemperatur, welche die Systemleistung optimiert, entsprechend einer Summe der Betriebsleistung für einen Betrieb der Vorrichtung (121) und der Kühlleistung zum Kühlen der Vorrichtung (121) bei der Betriebsfrequenz, unter Verwendung von Abgleichsinformationen zwischen Betriebsfrequenzen und vorab bestimmten Kandidatensolltemperaturen, wobei die Abgleichsinformationen einen Optimierungsdatensatz für jede Betriebsfrequenz umfassen und wobei die Abgleichsinformationen aus einem Graphen (500) abgeleitet sind, der jede Betriebsfrequenz mit einer optimalen Temperatur abgleicht; und
Einstellen (730) einer Betriebstemperatur der Vorrichtung (121) auf der Basis der Solltemperatur zum Anpassen der Solltemperatur durch Steuern eines Kühlers (122) der Vorrichtung (121), wobei die Betriebsfrequenz aufrechterhalten wird und wobei die Kandidatensolltemperaturen innerhalb eines Niedrigtemperaturbereichs liegen, in dem bei abnehmender Betriebstemperatur die Betriebsleistung abnimmt und die Kühlleistung zunimmt.

2. Verfahren nach Anspruch 1, wobei das Bestimmen (720) der Solltemperatur umfasst:
Bestimmen der Kandidatensolltemperatur in einem Solltemperaturbereich entsprechend einem Betriebsfrequenzbereich, zu dem die Betriebsfrequenz gehört, aus der Vielzahl von Kandidatensolltemperaturen, abgeglichen mit der Vielzahl von Betriebsfrequenzbereichen (510, 520, 530, 540), als die Solltemperatur.

3. Verfahren nach Anspruch 2, wobei die Kandidatensolltemperatur auf der Basis eines Mittelwerts, eines Maximalwerts, eines Minimalwerts oder eines Medianwerts von Temperaturen im Solltemperaturbereich bestimmt wird.

4. Verfahren nach einem der Ansprüche 1 bis 3, wobei die Kandidatensolltemperaturen vor dem Bestimmen der Solltemperatur auf der Basis einer Beziehung zwischen der Betriebsfrequenz, der Betriebstemperatur und der Systemleistung bestimmt werden.

5. Verfahren nach einem der Ansprüche 1 bis 4, wobei das Bestimmen (720) der Solltemperatur umfasst:
Bestimmen (720) der Solltemperatur unter Verwendung eines maschinellen Lernmodells (610), das mit kumulativen Betriebsdaten (630) trainiert wird, die während eines Istbetriebs der Vorrichtung (121) gesammelt wurden.

6. Verfahren nach Anspruch 5, wobei das maschinelle Lernmodell (610) auf der Basis der Betriebsdaten trainiert wird, um die Betriebsfrequenz der Solltemperatur zuzuordnen.

7. Verfahren nach einem der Ansprüche 1 bis 6, wobei das Bestimmen (720) der Solltemperatur umfasst:
Erhalten eines Optimierungsdatensatzes, der mit einem Betriebsmodus der Vorrichtung (121) entsprechend der Betriebsfrequenz abgeglichen ist; und
Bestimmen der Betriebstemperatur und einer Sollspannung auf der Basis des Optimierungsdatensatzes.

8. Verfahren nach einem der Ansprüche 1 bis 7, wobei die Optimierungstemperatur in einem Niedrigtemperaturbereich unterhalb von 150 Grad Kelvin (K) liegt.

9. Verfahren nach einem der Ansprüche 1 bis 8, wobei
der Kühler (122) zum Einstellen der Betriebstemperatur der Vorrichtung (121) ausgebildet ist, so dass diese in einem Niedrigtemperaturbereich unterhalb von 150 K liegt, der von der Steuerung des Kühlers (122) abhängig ist.

10. Verfahren nach einem der Ansprüche 1 bis 9, wobei die Solltemperatur, welche die Systemleistung optimiert, eine Temperatur ist, die Systemstromverbrauch reduziert.

11. Verfahren nach einem der Ansprüche 1 bis 10, wobei das Bestimmen (720) der Solltemperatur das Erhöhen der bestimmten Solltemperatur als Reaktion auf ein Erhöhen der Betriebsfrequenz umfasst.

12. Server (1300), umfassend:
eine Vorrichtung (1320), ausgebildet für den Betrieb (710) bei einer Betriebsfrequenz;
eine Vorrichtung (1310) mit Energiemanagement, ausgebildet zum:
als Reaktion auf den Betrieb der Vorrichtung (1320) bei der Betriebsfrequenz Bestimmen (720) einer Solltemperatur, welche die Systemleistung optimiert, entsprechend einer Summe der Betriebsleistung für einen Betrieb der Vorrichtung (1320) und der Kühlleistung zum Kühlen der Vorrichtung (1320) bei der Betriebsfrequenz, unter Verwendung von Abgleichsinformationen zwischen Betriebsfrequenzen und vorab bestimmten Kandidatensolltemperaturen, wobei die Abgleichsinformationen einen Optimierungsdatensatz für jede Betriebsfrequenz umfassen und wobei die Abgleichsinformationen von einem Graphen (500) abgeleitet sind, der jede Betriebsfrequenz mit einer optimalen Temperatur abgleicht; und
einen Kühler (1330), ausgebildet zum Einstellen (730) einer Betriebstemperatur der Vorrichtung (1320) auf der Basis der Solltemperatur zum Anpassen der Solltemperatur, wobei die Betriebsfrequenz aufrechterhalten wird und wobei die Kandidatensolltemperaturen innerhalb eines Niedrigtemperaturbereichs liegen, in dem bei abnehmender Betriebstemperatur die Betriebsleistung abnimmt und die Kühlleistung zunimmt.

13. Server (1300) nach Anspruch 12, wobei, zum Bestimmen (720) der Solltemperatur, die Energiemanagementvorrichtung (1310) zum Bestimmen der Kandidatensolltemperatur entsprechend einem Betriebsfrequenzbereich, zu dem die Betriebsfrequenz gehört, aus der Vielzahl von Kandidatensolltemperaturen, abgeglichen mit einer Vielzahl von Betriebsfrequenzbereichen (510, 520, 530, 540), als die Solltemperatur ausgebildet ist, oder
wobei zum Bestimmen der Solltemperatur die Energiemanagementvorrichtung (1310) zum Bestimmen der Solltemperatur unter Verwendung eines maschinellen Lernmodells (610), das mit kumulativen Betriebsdaten (630) trainiert wird, die während eines Istbetriebs der Vorrichtung (1320) gesammelt werden, ausgebildet ist, oder
wobei zum Bestimmen (720) der Solltemperatur die Energiemanagementvorrichtung (1310) ausgebildet ist zum Erhalten eines Optimierungsdatensatzes, der mit einem Betriebsmodus der Vorrichtung (1320) entsprechend der Betriebsfrequenz abgeglichen ist; und zum Bestimmen der Betriebstemperatur und einer Sollspannung aus dem Optimierungsdatensatz, oder
wobei die Solltemperatur unterhalb von 150 Grad Kelvin (K) liegt.

14. Nichtflüchtiges computerlesbares Speichermedium (1220) zum Speichern von Anweisungen, die, wenn von einem Prozessor (1210) ausgeführt, den Prozessor (1210) zum Ausführen des Energiemanagements nach einem der Ansprüche 1 bis 11 ausbilden.

## Revendications

1. Procédé avec gestion d'alimentation, comprenant:
la détermination (710) d'une fréquence de fonctionnement d'un dispositif (121);
en réponse au fonctionnement du dispositif (121) à la fréquence de fonctionnement, la détermination (720) d'une température cible qui optimise la puissance du système correspondant à une somme de la puissance de fonctionnement pour un fonctionnement du dispositif (121) et de la puissance de refroidissement pour refroidir le dispositif (121) à la fréquence de fonctionnement à l'aide d'informations de correspondance entre les fréquences de fonctionnement et les températures cibles candidates déterminées à l'avance, dans lequel les informations de correspondance comprennent un ensemble de données d'optimisation pour chaque fréquence de fonctionnement et dans lequel les informations de correspondance sont dérivées d'un graphique (500) faisant correspondre chaque fréquence de fonctionnement à une température optimale; et
l'ajustement (730) d'une température de fonctionnement du dispositif (121) sur la base de la température cible afin de s'adapter à la température cible en commandant un refroidisseur (122) du dispositif (121), dans lequel la fréquence de fonctionnement est maintenue, et dans lequel les températures cibles candidates se situent dans une plage de basses températures dans laquelle, à mesure que la température de fonctionnement diminue, la puissance de fonctionnement diminue et la puissance de refroidissement augmente.

2. Procédé selon la revendication 1, dans lequel la détermination (720) de la température cible comprend:
la détermination, en tant que température cible, de la température cible candidate dans une plage de températures cibles correspondant à une plage de fréquences de fonctionnement à laquelle appartient la fréquence de fonctionnement parmi la pluralité de températures cibles candidates correspondant à la pluralité de plages de fréquences de fonctionnement (510, 520, 530, 540).

3. Procédé selon la revendication 2, dans lequel la température cible candidate est déterminée sur la base de l'une quelconque parmi une valeur moyenne, une valeur maximale, une valeur minimale et une valeur médiane des températures dans la plage de températures cibles.

4. Procédé selon l'une des revendications 1 à 3, dans lequel les températures cibles candidates sont déterminées avant la détermination de la température cible sur la base d'une relation entre la fréquence de fonctionnement, la température de fonctionnement et la puissance du système.

5. Procédé selon l'une des revendications 1 à 4, dans lequel la détermination (720) de la température cible comprend:
la détermination (720) de la température cible à l'aide d'un modèle d'apprentissage automatique (610) qui est entraîné avec des données de fonctionnement cumulées (630) accumulées pendant un fonctionnement réel du dispositif (121).

6. Procédé selon la revendication 5, dans lequel le modèle d'apprentissage automatique (610) est entraîné sur la base des données de fonctionnement afin de mapper la fréquence de fonctionnement à la température cible.

7. Procédé selon l'une des revendications 1 à 6, dans lequel la détermination (720) de la température cible comprend:
l'obtention d'un ensemble de données d'optimisation adapté à un mode de fonctionnement du dispositif (121) correspondant à la fréquence de fonctionnement; et
la détermination de la température de fonctionnement et d'une tension cible sur la base de l'ensemble de données d'optimisation.

8. Procédé selon l'une des revendications 1 à 7, dans lequel la température d'optimisation se situe dans une plage de températures basses inférieure à 150 degrés Kelvin, K.

9. Procédé selon l'une des revendications 1 à 8, dans lequel le refroidisseur (122) est configuré pour ajuster la température de fonctionnement du dispositif (121) afin qu'elle se situe dans une plage de basses températures inférieure à 150 K en fonction du contrôle du refroidisseur (122).

10. Procédé selon l'une des revendications 1 à 9, dans lequel la température cible qui optimise la puissance du système est une température qui réduit la consommation d'énergie du système.

11. Procédé selon l'une des revendications 1 à 10, dans lequel la détermination (720) de la température cible comprend l'augmentation de la température cible déterminée en réponse à une augmentation de la fréquence de fonctionnement.

12. Serveur (1300) comprenant:
un dispositif (1320) configuré pour fonctionner (710) à une fréquence de fonctionnement;
un appareil (1310) avec gestion de la puissance configuré pour:
en réponse au fonctionnement du dispositif (1320) à la fréquence de fonctionnement, déterminer (720) une température cible qui optimise la puissance du système correspondant à une somme de la puissance de fonctionnement pour un fonctionnement du dispositif (1320) et la puissance de refroidissement pour refroidir le dispositif (1320) à la fréquence de fonctionnement en utilisant des informations de correspondance entre les fréquences de fonctionnement et les températures cibles candidates déterminées à l'avance, dans lequel les informations de correspondance comprennent un ensemble de données d'optimisation pour chaque fréquence de fonctionnement et dans lequel les informations de correspondance sont dérivées d'un graphique (500) faisant correspondre chaque fréquence de fonctionnement à une température optimale; et
un refroidisseur (1330) configuré pour ajuster (730) une température de fonctionnement du dispositif (1320) sur la base de la température cible afin de s'adapter à la température cible, dans lequel la fréquence de fonctionnement est maintenue, et dans lequel les températures cibles candidates se situent dans une plage de basses températures dans laquelle, à mesure que la température de fonctionnement diminue, la puissance de fonctionnement diminue et la puissance de refroidissement augmente.

13. Serveur (1300) selon la revendication 12, dans lequel, pour déterminer (720) la température cible, l'appareil de gestion de puissance (1310) est configuré pour déterminer, comme température cible, la température cible candidate correspondant à une plage de fréquences de fonctionnement à laquelle appartient la fréquence de fonctionnement parmi la pluralité de températures cibles candidates correspondant à une pluralité de plages de fréquences de fonctionnement (510, 520, 530, 540), ou bien
dans lequel, pour déterminer la température cible, le dispositif de gestion d'alimentation (1310) est configuré pour déterminer la température cible à l'aide d'un modèle d'apprentissage automatique (610) entraîné avec des données de fonctionnement cumulées (630) accumulées pendant un fonctionnement réel du dispositif (1320), ou bien
dans lequel, pour déterminer (720) la température cible, l'appareil de gestion d'alimentation (1310) est configuré pour obtenir un ensemble de données d'optimisation correspondant à un mode de fonctionnement du dispositif (1320) correspondant à la fréquence de fonctionnement; et déterminer la température de fonctionnement et une tension cible à partir de l'ensemble de données d'optimisation, ou bien
dans lequel la température cible est inférieure à 150 degrés Kelvin, K.

14. Support de stockage non transitoire lisible par ordinateur (1220) stockant des instructions qui, lorsqu'elles sont exécutées par un processeur (1210), configurent le processeur (1210) pour effectuer une gestion d'alimentation selon l'un quelconque des procédés des revendications 1 à 11.
